# FASCICULE DE BREVET EUROPEEN

(11) **EP 3 071 324 B1**
(45) Date de publication et mention de la délivrance du brevet: **13.03.2019**
(21) Numéro de dépôt: 14809924.5
(22) Date de dépôt: 14.11.2014
(51) Int. Cl.: B01J 20/32, B01J 20/08, B01J 20/18, B01J 20/28, B01J 20/30, B01J 29/08, B01J 37/04, B01J 37/08, B01J 21/08, B01J 23/02, B01J 29/40, B01J 29/70, B01J 29/18, B01J 29/60, B01J 29/83, B01J 29/84, B01J 29/85, B01J 37/00, B01J 20/10, C04B 28/14, C04B 111/00

(54) **ZÉOLITHE MISE EN FORME PAR EXTRUSION ET PASTILLAGE AVEC UN LIANT HYDRAULIQUE PRÉSENTANT DES PROPRIÉTÉS MÉCANIQUES AMÉLIORÉE ET SON PROCÉDÉ DE PRÉPARATION**
EXTRUSIONSGEFORMTES ZEOLITH UND PELLETIERUNG MIT EINEM HYDRAULISCHEN BINDEMITTEL MIT VERBESSERTEN MECHANISCHEN EIGENSCHAFTEN UND VERFAHREN ZUR HERSTELLUNG DAVON
ZEOLITE FORMED BY EXTRUSION AND PELLETING WITH A HYDRAULIC BINDER HAVING IMPROVED MECHANICAL PROPERTIES AND PROCESS FOR PREPARING SAME

(30) Priorité: 18.11.2013 FR 1361278
(43) Date de publication de la demande: 28.09.2016
(73) Titulaire: IFP Energies nouvelles, 92500 Rueil-Malmaison (FR)
(72) Inventeur: BAZER-BACHI, Delphine, F-69540 Irigny (FR); HARBUZARU, Bogdan, E-46022 Valencia (ES); LECOLIER, Eric, F-92370 Chaville (FR)
(74) Mandataire: IFP Energies nouvelles
(86) Numéro de dépôt international: PCT/FR2014/052907
(87) Numéro de publication internationale: WO 2015/071605

(56) Documents cités:
- EP-A1- 2 113 494
- DE-A1-102008 036 109
- US-A1- 2006 029 542
- US-A1- 2006 148 642

## Description

La présente invention concerne le domaine des zéolithes, en particulier, celui de leur mise en forme en vue d'une utilisation dans des applications industrielles pour la catalyse, le stockage ou la séparation. Plus précisément cette invention concerne une nouvelle formulation de matériau à base de zéolithe au moyen d'une formulation liante comprenant au moins un liant hydraulique. La présente invention concerne également le mode de préparation de la zéolithe mise en forme.

### Art antérieur

Dans toute la suite du texte, on entend par zéolithes les solides cristallisés microporeux pour lesquelles leur structure est basée sur un enchaînement tridimensionnel et régulier de tétraèdres TO₄, l'élément T est généralement Si⁴⁺ ou Al³⁺ mais d'autres éléments comme B, P, Ge, Ga, Ti ou Fe peuvent être également incorporés chaque oxygène étant commun à deux tétraèdres. Des molécules d'eau et des cations (alcalins, alcalino-terreux) compensant la charge négative de la charpente minérale sont généralement présents au sein de la microporosité. Comme exemple de zéolithes nous pouvons donner sans etre exhaustifs la liste suivante : zéolithe X, zéolithe Y, ZSM-12, mordenite, zéolithe A, zéolithe P, zéolithe beta, ZSM-5, EMC-2, mazzite, boggsite, gismondite, heulandite, chabasite, LTL, MCM-22, SAPO-31, AlPO-4, GaPO-4, VPI-5.

La mise en forme de zéolithes est généralement abordée par le biais des procédés de compaction, extrusion ou granulation avec ou sans additifs. La présence d'aditifs est nécessaire pour améliorer les qualités du matériau final en terme de résistance mécanique. Les additifs généralement utilisés pour la mise en forme de zéolithe sont les formes hydroxyliques d'alumine tel que par exemple la boehmite, les silices ou les argiles. De nombreuses publications telles que "Zeolites in Industrial Separation and Catalysis" Wiley page 70, "Studies in surface science and catalysis 53" Elsevier, page 509, les brevets US7594995B2, US4579831A, US5180701A et la demande de brevet US2013197290 décrivent ce type d'additifs. Ces formulations avec un liant classique de l'art antérieur présentent le désavantage de nécessiter une étape de calcination opérant à une température d'au moins 400°C dans le cas où l'additif utilisé est l'alumine hydroxylique, pour l'obtention de la résistance mécanique désirée. La demande de brevet US 2006/148642 décrit un adsorbant sec renouvelable et son utilisation pour la capture de dioxyde de carbone. L'adsorbant comprend moins de 70% poids d'un composé active choisi parmi les carbonates ou bicarbonates de métaux alcalins ou alcalino-terreux des groupes I et II et des oxydes de métaux capables d'être convertis en carbonates ou bicarbonates, moins de 70% poids d'un support pouvant être une zéolithe naturelle ou de synthèse, par exemple une zéolithe 13X et moins de 70% poids d'un liant inorganique pouvant être un ciment tel que un silicate de calcium ou tel que le ciment Portland. La demande de brevet décrit également l'emploi de liant organique dans une teneur entre 0.5 et 5 % poids, et plus particulièrement de polyéthylène glycol dans la composition de l'adsorbant.

De plus, ces additifs doivent être ajoutés à des teneurs généralement supérieures à 20% poids pour l'obtention de la résistance mécanique désirée, mais aux dépends du volume poreux du matériau.

Un objectif de la présente invention est de fournir un nouveau matériau comprenant au moins une zéolithe mise en forme avec au moins un liant hydraulique, de préférence par pastillage en présence d'un solvant ou par extrusion, ledit matériau présentant des propriétés accrues, notamment en terme de résistance mécanique et étant également résistant à une élévation de température compatible avec la zéolithe.

Un autre objectif de la présente invention est de fournir un procédé de préparation dudit matériau selon l'invention, ledit matériau obtenu présentant une bonne résistance mécanique et étant adapté à son utilisation en présence d'un solvant et donc dans un procédé industriel sur de longues périodes.

### Résumé de l'invention :

La présente invention concerne un matériau comprenant au moins une zéolithe mise en forme avec une formulation liante comprenant au moins un liant hydraulique, dans lequel ladite formulation liante comprend également au moins un adjuvant organique choisi parmi les dérivés de cellulose, les polyéthylène glycols, les acides aliphatiques mono-carboxyliques, les composés aromatiques alkylés, les sels d'acide sulphonique, les acides gras, la polyvinyl pyrrolidone, l'alcool polyvinylique, la méthylcellulose, les polyacrylates, les polyméthacrylates, le polyisobutène, le polytétrahydrofurane, l'amidon, les polymères de type polysaccharide, le scléroglucane, les dérivés de type cellulose hydroxyéthylée, la carboxyméthylcellulose, les lignosulfonates et les dérivés de galactomannane, pris seul ou en mélange, et dans lequel ledit matériau présente la composition suivante :
- 10 % à 95 % poids d'au moins une zéolithe
,- 1 % à 20 % poids d'au moins un liant hydraulique,
- 0 % à 5 % poids d'au moins une source de silice,
- 1 % à 7 % poids d'au moins un adjuvant organique, les pourcentages poids étant exprimés par rapport au poids total dudit matériau et la somme des teneurs en chacun des composés dudit matériau étant égale à 100%.

La présente invention concerne également un procédé de préparation dudit matériau selon l'invention comprenant au moins les étapes suivantes :
a) une étape de mélange d'au moins une poudre d'au moins une zéolithe avec au moins une poudre d'au moins un liant hydraulique et au moins un solvant pour obtenir un mélange,b) une étape de mise en forme du mélange obtenu à l'issue de l'étape a), dans lequel au moins un adjuvant organique est également mélangé au cours de l'étape a), et dans lequel ledit procédé de préparation comprend également une étape c) de maturation du matériau mis en forme obtenu à l'issue de l'étape b), ladite étape de maturation étant réalisée à une température comprise entre 0 et 300°C, pendant une durée comprise entre 1 heure et 48 heures, sous air humide contenant entre 20 et 100% poids d'eau.

Un avantage de la présente invention est de proposer un procédé de préparation permettant l'obtention d'un matériau comprenant au moins une zéolithe mise en forme avec une formulation liante comprenant au moins un liant hydraulique, ledit matériau présentant des propriétés accrues, notamment en terme de résistance mécanique et étant résistant à une élévation de température, ce qui permet d'envisager la mise en oeuvre dudit matériau dans des procédés en présence d'eau ou de solvants et à des températures relativement élevées.

Un autre avantage de la présente invention est de proposer, dans un mode de réalisation préféré, un procédé simplifié de préparation dudit matériau présentant des propriétés accrues, notamment en terme de résistance mécanique, ne nécessitant pas d'étape de calcination après l'étape de mise en forme, l'absence d'étape de calcination n'ayant pas d'effet sur les propriétés du matériau obtenu.

Un autre avantage de la présente invention est de proposer un procédé de préparation dudit matériau selon l'invention, pouvant être mis en oeuvre quelle que soit la teneur en zéolithe, ledit procédé permettant d'obtenir des matériaux présentant une bonne résistance mécanique et donc utilisables en lit fixe.

### Description détaillée

Conformément à l'invention, ledit matériau comprend au moins une zéolithe mise en forme avec une formulation liante comprenant au moins un liant hydraulique, dans lequel ladite formulation liante comprend également au moins un adjuvant organique.

La(es)dite(s) zéolithe(s) utilisée(s) dans le matériau selon la présente invention sont de préférence choisies parmi les zéolithes X, Y, la ZSM-12, la mordenite, la zéolithe A, la zéolithe P, la zéolithe beta, la ZSM-5, la mazzite, la boggsite, la gismondite, l'heulandite, la chabasite, la LTL, la MCM-22, la EMC-1, la SAPO-31, l'AlPO-4, la GaPO-4 et la VPI-5, seules ou en mélange.

De manière préférée, la(es)dite(s) zéolithe(s) utilisée(s) dans le matériau selon la présente invention sont choisies parmi les zéolithes X, Y, la ZSM-12, la mordenite, la zéolithe A, la zéolithe P, la zéolithe beta, la ZSM-5, la SAPO-31, l'AlPO-4, la GaPO-4 et la VPI-5, seules ou en mélange.

Le(s)dit(s) liant(s) hydraulique(s) de la formulation liante avec le(s)quel(s) ladite zéolithe est mise en forme est (sont) avantageusement choisi(s) parmi les liants hydrauliques bien connus de l'Homme du métier. De manière préférée, le(s)dit(s) liant(s) hydraulique(s) est (sont) choisi(s) parmi le ciment Portland, les ciments alumineux tels que par exemple le ciment fondu, Ternal, SECAR 51, SECAR 71, SECAR 80, les ciments sulfoalumineux, le plâtre, les ciments à liaisons phosphate tels que par exemple le ciment phospho-magnésien, les ciments au laitier de haut fourneau et les phases minérales choisies parmi l'alite (Ca₃SiO₅), la bélite (Ca₂SiO₄), l'alumino-ferrite (ou brownmillérite : de demi-formule Ca₂(Al,Fe³⁺)₂O₅)), l'aluminate tricalcique (Ca₃Al₂O₆), des aluminates de calcium comme l'aluminate monocalcique (CaAl₂O₄), l'hexoaluminate calcique (CaAl₁₂O₁₈), pris seul ou en mélange. De manière encore plus préférée le liant hydraulique est choisi parmi le ciment Portland et les ciments alumineux.

Le(s)dit(s) liant(s) hydraulique(s) permet(tent) la mise en forme dudit matériau selon l'invention et lui confère(nt) une bonne résistance mécanique.

Ladite formulation liante comprenant au moins un liant hydraulique peut également éventuellement comprendre au moins une source de silice.

Dans le cas où ladite formulation liante comprend également au moins une source de silice, ladite source de silice est avantageusement choisie parmi la silice de précipitation et la silice issue de sous-produits comme les cendres volantes telle que par exemple les particules silico-alumineuses ou silico-calciques, et les fumées de silice.

De préférence, la source de silice présente une taille inférieure à 10 µm, et de façon préférée inférieure à 5 µm, de manière encore préférée inférieure à 1µm.

De manière préférée, la source de silice est sous forme amorphe ou cristalline.

Ladite formulation liante comprenant au moins un liant hydraulique et comprend également au moins un adjuvant organique.

Ledit adjuvant organique est choisi parmi les dérivés de cellulose, les polyéthylène glycols, les acides aliphatiques mono-carboxyliques, les composés aromatiques alkylés, les sels d'acide sulphonique, les acides gras, la polyvinyl pyrrolidone, l'alcool polyvinylique, la méthylcellulose, les polyacrylates, les polyméthacrylates, le polyisobutène, le polytétrahydrofurane, l'amidon, les polymères de type polysaccharide (comme la gomme de xanthane), le scléroglucane, les dérivés de type cellulose hydroxyéthylée, la carboxyméthylcellulose, les lignosulfonates et les dérivés de galactomannane, pris seul ou en mélange.

Ledit matériau selon la présente invention se présente avantageusement sous forme d'extrudés, de billes ou de pastilles.

Lesdits matériaux selon l'invention présentent des propriétés mécaniques accrues, notamment en terme de résistance mécanique, quelle que soit la teneur en zéolithe mise en oeuvre, et sont résistants à une élévation de température, ce qui permet d'envisager la mise en oeuvre dudit matériau dans des procédés en présence d'eau ou de solvants et à des températures relativement élevées mais tout de même limitées par la tenue en température de la zéolithe.

Lesdits matériaux selon l'invention peuvent donc être employés pour des applications en catalyse, stockage de gaz et séparation.

En particulier, lesdits matériaux selon l'invention présentent une résistance mécanique mesurée par le test d'écrasement grain à grain, notée par la suite EGG au moins supérieure à 0,4 daN/mm et de préférence au moins supérieure à 0,9 daN/mm et de manière préférée au moins supérieure à 1 daN/mm. Ces propriétés de résistance mécanique sont maintenues, y compris après un traitement en température jusqu'à 500°C (lorsque la zéolithe associée résiste à ces températures) et pour des compositions de matériaux comprenant jusqu'à 95% en poids zéolithe par rapport à la masse totale dudit matériau.

On entend par résistance mécanique à l'écrasement latéral, la résistance mécanique du matériau selon l'invention déterminée par le test d'écrasement grain à grain (EGG). Il s'agit d'un test normalisé (norme ASTM D4179-01) qui consiste à soumettre un matériau sous forme d'objet millimétrique, comme une bille, une pastille ou un extrudé, à une force de compression générant la rupture. Ce test est donc une mesure de la résistance en traction du matériau. L'analyse est répétée sur un certain nombre de solides pris individuellement et typiquement sur un nombre de solides compris entre 10 et 200. La moyenne des forces latérales de rupture mesurées constitue l'EGG moyen qui est exprimé dans le cas des granules en unité de force (N), et dans le cas des extrudés en unité de force par unité de longueur (daN/mm ou décaNewton par millimètre de longueur d'extrudé).

La présente invention concerne également un procédé de préparation dudit matériau selon l'invention comprenant au moins les étapes suivantes :

### Étape a) :

Conformément à l'invention, ladite étape a) consiste en le mélange d'au moins une poudre d'au moins une zéolithe, avec au moins une poudre d'au moins un liant hydraulique et au moins un solvant pour obtenir un mélange. Au moins un adjuvant organique est également mélangé au cours de l'étape a).

De préférence, au moins une source de silice est également mélangé au cours de l'étape a).

De manière préférée, au moins ladite source de silice et au moins ledit adjuvant organique peuvent être mélangés sous forme de poudre ou en solution dans ledit solvant.

Ledit solvant est avantageusement choisi parmi l'eau, l'éthanol, les alcools et les aminés. De préférence, ledit solvant est l'eau.

Dans le cadre de l'invention, il est tout à fait envisageable de procéder à des mélanges de plusieurs poudres de zéolithes différentes et/ou de poudres de sources de silice différentes et/ou de poudres de liants hydrauliques différents.

L'ordre dans lequel le mélange des poudres d'au moins une zéolithe, d'au moins un liant hydraulique, éventuellement d'au moins une source de silice et éventuellement d'au moins un adjuvant organique dans le cas où ceux-ci sont mélangés sous forme de poudres, avec au moins un solvant est réalisé est indifférent.

Le mélange desdites poudres et dudit solvant peut avantageusement être réalisé en une seule fois.

Les ajouts de poudres et de solvant peuvent également avantageusement être alternés.

De préférence, lesdites poudres d'au moins une zéolithe, d'au moins un liant hydraulique, éventuellement d'au moins une source de silice et éventuellement d'au moins un adjuvant organique, dans le cas ou ceux-ci sont mélangés sous forme de poudres, sont d'abord pré-mélangées, à sec, avant l'introduction du solvant.

Lesdites poudres pré-mélangées sont ensuite avantageusement mises en contact avec ledit solvant. Dans un autre mode de réalisation, au moins ladite source de silice et au moins ledit adjuvant organique peuvent préalablement être en solution ou suspension dans ledit solvant quand ledit solvant est mis en contact avec les poudres d'au moins une zéolithe et d'au moins un liant hydraulique. La mise en contact avec ledit solvant conduit à l'obtention d'un mélange qui est ensuite malaxé.

De préférence, ladite étape a) de mélange est réalisée par malaxage, en batch ou en continu.

Dans le cas où ladite étape a) est réalisée en batch, ladite étape a) est avantageusement réalisée dans un malaxeur de préférence équipé de bras en Z, ou à cames, ou dans tout autre type de mélangeur tel que par exemple un mélangeur planétaire. Ladite étape a) de mélange permet d'obtenir un mélange homogène des constituants pulvérulents.

De préférence, ladite étape a) est mise en oeuvre pendant une durée comprise entre 5 et 60 min, et de préférence entre 10 et 50 min. La vitesse de rotation des bras du malaxeur est avantageusement comprise entre 10 et 75 tours/minute, de façon préférée entre 25 et 50 tours/minute.

### Étape b) :

Conformément à l'invention, ladite étape b) consiste en la mise en forme du mélange obtenu à l'issue de l'étape a) de mélange.

De préférence, le mélange obtenu à l'issue de l'étape a) de mélange est avantageusement mis en forme par extrusion ou par pastillage.

Dans le cas où la mise en forme du mélange issu de l'étape a) est réalisée par extrusion, ladite étape b) est avantageusement réalisée dans une extrudeuse piston, mono-vis ou bi-vis.

Dans ce cas, un adjuvant organique peut éventuellement être ajouté dans l'étape a) de mélange. La présence dudit adjuvant organique facilite la mise en forme par extrusion. Ledit adjuvant organique est décrit plus haut et est introduit dans l'étape a) dans les proportions indiquées plus haut.

Dans le cas où ledit procédé de préparation est mis en oeuvre en continu, ladite étape a) de mélange peut être couplée avec l'étape b) de mise en forme par l'extrusion dans un même équipement. Selon cette mise en oeuvre, l'extrusion du mélange nommé aussi "pâte malaxée" peut être réalisée soit en extrudant directement en bout de malaxeur continu de type bi-vis par exemple, soit en reliant un ou plusieurs malaxeurs batch à une extrudeuse. La géométrie de la filière, qui confère leur forme aux extrudés, peut être choisie parmi les filières bien connues de l'Homme du métier. Elles peuvent ainsi être par exemple, de forme cylindrique, multilobée, cannelée ou à fentes.

Dans le cas où la mise en forme du mélange issu de l'étape a) est réalisée par extrusion, la quantité de solvant ajoutée dans l'étape a) de mélange est ajustée de façon à obtenir, à l'issue de cette étape et quelle que soit la variante mise en oeuvre, un mélange ou une pâte qui ne coule pas mais qui n'est pas non plus trop sèche afin de permettre son extrusion dans des conditions convenables de pression bien connues de l'Homme du métier et dépendantes de l'équipement d'extrusion utilisé.

De préférence, ladite étape b) de mise en forme par extrusion est opérée à une pression d'extrusion supérieure à 1 MPa et de préférence comprise entre 3 MPa et 10 MPa.

Dans le cas où la mise en forme du mélange issu de l'étape a) est réalisée par pastillage, la quantité de solvant mise en oeuvre dans l'étape a) de mélange est ajustée afin de permettre un remplissage facile des matrices de pastillage et un pastillage dans des conditions convenables de pression bien connues de l'Homme du métier et dépendantes de l'équipement de pastillage utilisé. De préférence, ladite étape b) de mise en forme par pastillage est opérée à une force de compression supérieure à 1kN et de préférence comprise entre 2kN et 20kN. La géométrie de la matrice de pastillage, qui confère leur forme aux pastilles, peut être choisie parmi les matrices bien connues de l'Homme du métier. Elles peuvent ainsi être par exemple, de forme cylindrique. Les dimensions des pastilles (diamètre et longueur) sont adaptées pour convenir aux besoins du procédé dans lequel elles seront utilisées. De préférence les pastilles ont un diamètre compris entre 0,3 et 10mm et un rapport diamètre sur hauteur de préférence entre 0,25 et 10.

Le procédé de préparation dudit matériau selon l'invention comprend également une étape c) de maturation du matériau mis en forme obtenu à l'issue de l'étape b). Ladite étape de maturation est réalisée à une température comprise entre 0 et 300°C, de préférence entre 20 et 200°C et de manière préférée entre 20 et 150°C, pendant une durée comprise entre 1 h et 48 h sous air.

Ladite étape de maturation est effectuée sous air humide contenant entre 20 et 100% poids d'eau. Cette étape permet une bonne hydratation du matériau nécessaire pour une prise complète du liant hydraulique.

Selon un mode de réalisation préféré, le matériau mis en forme issu de l'étape b) de mise en forme et ayant subi une étape c) de maturation, ne subit pas d'étape de calcination finale. Dans ce cas, les propriétés, notamment en terme de résistance mécanique, du matériau mis en forme obtenu à l'issue de l'étape b) de mise en forme et à l'issue de l'étape c) de maturation ne sont pas modifiées et restent très élevées.

Selon un autre mode de réalisation préféré, le matériau mis en forme issu de l'étape b) de mise en forme et ayant subi une étape c) de maturation, peut également subir une étape d) de calcination à une température comprise entre 50 et 500°C, de préférence entre 100 et 300°C pendant une durée comprise entre 1 et 6 h et de préférence comprise entre 1 et 4h. Cette étape de calcination est notamment utile afin d'éliminer les adjuvants organiques utilisés afin de faciliter la mise en forme du matériau. La température de ladite étape d) de calcination est de préférence comprise entre 50°C et la température de dégradation de la zéolithe ou de la plus fragile des zéolithes utilisées dans le matériau selon la présente invention, de préférence entre 150 et 350°C sur une durée comprise entre 1 et 6 h et de préférence entre 2 et 4 h.

Ladite étape d) de calcination optionnelle est avantageusement mise en oeuvre sous un flux gazeux comprenant de l'oxygène, par exemple de préférence les extrudés sont calcinés sous air sec ou avec différents taux d'humidité ou encore traités en température en présence d'un mélange gazeux comprenant un gaz inerte, de préférence l'azote, et de l'oxygène. Le mélange gazeux utilisé comprend de préférence au moins 5 % volume, voire de préférence au moins 10 % volume d'oxygène.

Ladite étape de calcination est avantageusement mise en oeuvre dans le cas où le matériau obtenu selon la présente invention est utilisé comme support de catalyseur dans des procédés opérant à haute température. Dans ce cas, il est avantageux de traiter les matériaux utilisés à la température à laquelle il sera soumis dans le procédé.

A l'issue du procédé de préparation du matériau selon l'invention, le matériau obtenu se présente sous forme d'extrudés ou de pastilles.

Cependant, il n'est pas exclu que lesdits matériaux obtenus soient ensuite, par exemple, introduits dans un équipement permettant d'arrondir leur surface, tel qu'un drageoir ou tout autre équipement permettant leur sphéronisation.

Ledit procédé de préparation selon l'invention permet d'obtenir des matériaux selon l'invention présentant des valeurs de résistance mécanique mesurées par écrasement grain à grain supérieures à 0,4 daN/mm, de préférence supérieure à 0,9 daN/mm et de manière préférée supérieure à 1 daN/mm, quelle que soit la teneur en zéolithe mise en oeuvre.

Le matériau obtenu à l'issue du procédé de préparation selon l'invention peut être utilisé pour des applications en catalyse, séparation, purification, captage, stockage...

Ledit matériau est mis en contact avec la charge gazeuse à traiter dans un réacteur, qui peut être soit un réacteur en lit fixe, soit un réacteur radial, ou bien encore un réacteur en lit fluidisé.

Dans le cas d'une application dans les domaines de la catalyse et des séparations, la valeur d'EGG attendue est supérieure à 0,9 daN/mm, de préférence supérieure à 1 daN/ mm.

Les exemples ci- dessous illustrent l'invention sans en limiter la portée.

### EXEMPLES

Afin d'exemplifier l'invention, plusieurs mode de préparation sont décrits, sur la base de la mise en forme d'une zéolithe en particulier une zéolithe Y de rapport Si/Al = 2,5 préparé selon le procédé de préparation décrit dans "Verified syntheses of zeolitic materials" 2nd Revised Edition 2001.

### Exemple 1 (comparatif) :

La poudre de zéolithe Y est pastillée à l'aide d'une machine de compression de marque MTS instrumentée en pression et déplacement et équipée d'un système composé d'une matrice et de poinçons et permettant la fabrication de compacts. Le diamètre du dispositif sélectionné pour ces essais est de 4 mm. La matrice est alimentée en poudre de zéolithe Y et une force de 7 kN est appliquée au système.

Les compacts obtenus présentent les caractéristiques suivantes : S_{BET} =800m²/g, EGG=0,7 daN/mm.

L'analyse de ces compacts par diffraction des rayons X montre une faible perte de cristallinité induite par cette méthode de mise en forme qui se traduit également par une diminution de la surface spécifique (qui était de 850m²/g sur la poudre de zéolithe). Les pastilles se détruisent facilement au contact d'un solvant (tests réalisés avec de l'eau et de l'éthanol).

### Exemple 2 (zéolithe Y mise en forme par extrusion selon l'invention) :

Préparation d'un solide comprenant 67 % de zéolithe Y : les poudres de zéolithe Y (67% poids), de silice (5,8%), de ciment portland (Black label produit par Dyckerhoff) (22,4%) et de methocel (K15M) (4,8%) sont introduites et pré-mélangées dans un malaxeur de marque Brabender. Les pourcentages poids sont exprimés par rapport à la quantité totale de poudres introduites. L'eau est ajoutée goutte à goutte jusqu'à obtention d'une pâte et le malaxage est poursuivi pendant 20 minutes. La pâte obtenue est ensuite extrudée sur extrudeuse piston de marque MTS en utilisant une filière cylindrique de diamètre 2 mm

Les extrudés sont stockés dans les conditions ambiantes le temps de la prise du ciment (48 heures). Les extrudés obtenus présentent une valeur d'EGG de 2,0 daN/mm et une S_{BET} de 575m²/g.

### Exemple 3 (zéolithe Y mise en forme par extrusion selon l'invention : effet du post-traitement) :

Préparation du solide comprenant 67% de zéolithe Y : la préparation est similaire à celle de l'exemple 2 à la différence près que le matériau mis en forme par extrusion subit ensuite une étape de maturation à une température de 20°C pendant 48h, sous air humide comprenant 100% poids d'eau.

Dans ce cas, la résistance mécanique est encore améliorée avec un EGG de 2,7 daN/mm

### Exemple 4 (zéolithe Y mise en forme par extrusion selon l'invention) :

Préparation du solide comprenant 80,9% de zéolithe Y : le mode de préparation est identique à l'exemple 2 à la différence près que les proportions massiques des différents composants sont : 11,4% de ciment portland (Black label produit par Dyckerhoff), 2,9% de silice et 4,8% de méthocel et que le matériau mis en forme par extrusion subit ensuite une étape de maturation à une température de 20°C pendant 48h, sous air humide comprenant 100% poids d'eau.

Les extrudés obtenus présentent une valeur d'EGG de 1,9 daN/mm et une S_{BET} de 685m²/g.

### Exemple 5 (zéolithe Y mise en forme par pastillage selon l'invention) :

Les poudres de zéolithe Y (90% poids), de ciment portland (Black label produit par Dyckerhoff) (5%) et de methocel (K15M) (5%) sont introduites et pré-mélangées dans un malaxeur de marque Brabender avec 10 % du poids total des poudres d'eau pendant 15 minutes. Le mélange obtenu est pastillé à l'aide d'une machine de compression de marque MTS instrumentée en pression et déplacement et équipée d'un système composé d'une matrice et de poinçons et permettant la fabrication de compacts. Le diamètre du dispositif sélectionné pour ces essais est de 4 mm. Une force de 7kN est appliquée au système. Le matériau mis en forme par pastillage subit ensuite une étape de maturation à une température de 20°C pendant 4 jours, sous air humide comprenant 100% poids d'eau. Les compacts obtenus présentent les caractéristiques suivantes : S_{BET} =760m²/g, EGG=1 daN/mm

Les pastilles ne se détruisent pas au contact d'un solvant (tests réalisés avec de l'eau et de l'éthanol).

### Exemple 6 (zéolithe Y mise en forme par extrusion selon l'invention) :

Préparation du solide comprenant 95% de zéolithe Y : le mode de préparation est identique à l'exemple 2 à la différence près que les proportions massiques des différents composants sont : 4% de ciment portland (Black label produit par Dyckerhoff) et 1 % de méthocel et que le matériau mis en forme subit ensuite une étape de maturation à une température de 20°C pendant 48h, sous air humide comprenant 100% poids d'eau.

Les extrudés obtenus présentent une valeur d'EGG de 1 daN/mm et une S_{BET} de 800m²/g.

## Revendications

1. Matériau comprenant au moins une zéolithe mise en forme avec une formulation liante comprenant au moins un liant hydraulique, dans lequel ladite formulation liante comprend également au moins un adjuvant organique choisi parmi les dérivés de cellulose, les polyéthylène glycols, les acides aliphatiques mono-carboxyliques, les composés aromatiques alkylés, les sels d'acide sulphonique, les acides gras, la polyvinyl pyrrolidone, l'alcool polyvinylique, la méthylcellulose, les polyacrylates, les polyméthacrylates, le polyisobutène, le polytétrahydrofurane, l'amidon, les polymères de type polysaccharide, le scléroglucane, les dérivés de type cellulose hydroxyéthylée, la carboxyméthylcellulose, les lignosulfonates et les dérivés de galactomannane, pris seul ou en mélange, et dans lequel ledit matériau présente la composition suivante :
- 10 % à 95 % poids d'au moins une zéolithe,
- 1 % à 20 % poids d'au moins un liant hydraulique,
- 0 % à 5 % poids d'au moins une source de silice,
- 1 % à 7 % poids d'au moins un adjuvant organique, les pourcentages poids étant exprimés par rapport au poids total dudit matériau et la somme des teneurs en chacun des composés dudit matériau étant égale à 100%.

2. Matériau selon la revendication 1 dans lequel ladite zéolithe est choisie parmi les zéolithes X, Y, la ZSM-12, la mordenite, la zéolithe A, la zéolithe P, la zéolithe beta, la ZSM-5, la mazzite, la boggsite, la gismondite, l'heulandite, la chabasite, la LTL, la MCM-22, la EMC-2, la SAPO-31, l'AlPO-4, la GaPO-4 et la VPI-5, seules ou en mélange.

3. Matériau selon l'une des revendications 1 ou 2 dans lequel ledit liant hydraulique est choisi parmi le ciment Portland, les ciments alumineux, les ciments sulfoalumineux, le plâtre, le ciment à liaisons phosphate, les ciments au laitier de haut fourneau et les phases minérales choisies parmi l'alite (Ca₃SiO₅), la bélite (Ca₂SiO₄), l'alumino-ferrite (ou brownmillérite : de demi-formule Ca₂(Al,Fe³⁺)₂O₅)), l'aluminate tricalcique (Ca₃Al₂O₆), des aluminates de calcium comme l'aluminate monocalcique (CaAl₂O₄), l'hexoaluminate calcique (CaAl₁₂O₁₈), pris seul ou en mélange.

4. Matériau selon la revendication 3 dans lequel le liant hydraulique est choisi parmi le ciment Portland et les ciments alumineux.

5. Matériau selon l'une des revendications 1 à 4 dans lequel ladite formulation liante comprend également au moins une source de silice.

6. Matériau selon l'une des revendications 1 à 5 dans lequel ledit matériau se présente sous forme d'extrudés, de billes ou de pastilles.

7. Procédé de préparation du matériau selon l'une des revendications 1 à 6 comprenant au moins les étapes suivantes :
a) une étape de mélange d'au moins une poudre d'au moins une zéolithe avec au moins une poudre d'au moins un liant hydraulique et au moins un solvant pour obtenir un mélange,
b) une étape de mise en forme du mélange obtenu à l'issue de l'étape a),
dans lequel au moins un adjuvant organique est également mélangé au cours de l'étape a), et dans lequel ledit procédé de préparation comprend également une étape c) de maturation du matériau mis en forme obtenu à l'issue de l'étape b), ladite étape de maturation étant réalisée à une température comprise entre 0 et 300°C, pendant une durée comprise entre 1 heure et 48 heures, sous air humide contenant entre 20 et 100% poids d'eau.

8. Procédé de préparation selon la revendication 7 dans lequel au moins une source de silice est également mélangée au cours de l'étape a).

9. Procédé de préparation selon l'une des revendications 7 ou 8 dans lequel ladite étape b) est réalisée par extrusion ou par pastillage.

10. Procédé de préparation selon l'une des revendications 7 à 9 dans lequel ledit matériau mis en forme issu de l'étape b) de mise en forme et ayant subi une étape c) de maturation, ne subit pas d'étape de calcination finale.

11. Procédé de préparation selon l'une des revendications 7 à 9 dans lequel ledit procédé de préparation comprend également une étape d) de calcination à une température comprise entre 50 et 500°C, pendant une durée comprise entre 1 et 6 h.

## Patentansprüche

1. Material, umfassend mindestens einen Zeolithen, der mit einer Bindemittelformulierung, umfassend mindestens ein hydraulisches Bindemittel, geformt wird, wobei die Bindemittelformulierung auch mindestens einen organischen Zusatz umfasst, ausgewählt unter den Derivaten von Zellulose, den Polyethylenglykolen, den aliphatischen Monocarboxylsäuren, den aromatischen Alkylverbinden, den Sulphonsäuresalzen, den Fettsäuren, dem Polyvinylpyrrolidon, dem Polyvinylalkohol, der Methylzellulose, den Polyacrylaten, den Polymethacrylaten, dem Polyisobuten, dem Polytetrahydrofuran, der Stärke, den Polymeren des Typs Polysaccharide, dem Skleroglucan, den Derivaten des Typs Hydroxyethylzellulose, der Carboxymethylzellulose, den Lignosulfonaten und den Galactomannan-Derivaten, alleine oder im Gemisch, und bei dem das Material folgende Zusammensetzung aufweist:
- 10 bis 95 Gew.-% mindestens eines Zeolithen,
- 1 bis 20 Gew.-% mindestens eines hydraulischen Bindemittels,
- 0 bis 5 Gew.-% mindestens einer Siliziumoxidquelle,
- 1 bis 7 Gew.-% mindestens eines organischen Zusatzes, wobei die Gewichtsprozentsätze bezogen auf das Gesamtgewicht des Materials ausgedrückt sind, und wobei die Summe der Gehaltswerte an jeder der Verbindungen des Materials gleich 100 % ist.

2. Material nach Anspruch 1, bei dem der Zeolith unter den Zeolithen X, Y, ZSM-12, Mordenit, Zeolith A, Zeolith P, Zeolith Beta, ZSM-5, Mazzit, Boggsit, Gismondit, Heulandit, Chabasit, LTL, MCM-22, EMC-2, SAPO-31, AlPO-4, GaPO-4 und VPI-5, alleine oder im Gemisch, ausgewählt ist.

3. Material nach einem der Ansprüche 1 oder 2, bei dem das hydraulische Bindemittel unter dem Portlandzement, den aluminiumhaltigen Zementen, den sulfoaluminiumhaltigen Zementen, dem Gips, dem Zement mit Phosphatverbindungen, den Hochofenschmelzzementen und den mineralischen Phasen ausgewählt ist, die unter Alit (Ca₃SiO₅), Belit (Ca₂SiO₄), Alumoferrit (oder Brownmillerit: der Halbformel Ca₂(Al,Fe³⁺)₂O₅)), Tricalciumaluminat (Ca₃Al₂O₆), Calciumaluminaten, wie Monocalciumaluminat (CaAl₂O₄), Calciumhexoaluminat (CaAl₁₂O₁₈), alleine oder im Gemisch, ausgewählt sind.

4. Material nach Anspruch 3, bei dem das hydraulische Bindemittel unter dem Portlandzement und den aluminiumhaltigen Zementen ausgewählt ist.

5. Material nach einem der Ansprüche 1 bis 4, bei dem die Bindemittelformulierung auch mindestens eine Siliziumoxidquelle umfasst.

6. Material nach einem der Ansprüche 1 bis 5, bei dem das Material in Form von Extrudaten, Kugeln oder Tabletten vorhanden ist.

7. Verfahren zur Herstellung eines Materials nach einem der Ansprüche 1 bis 6, umfassend mindestens die folgenden Schritte:
a) einen Schritt des Mischens mindestens eines Pulvers mindestens eines Zeolithen mit mindestens einem Pulver mindestens eines hydraulischen Bindemittels und mindestens einem Lösungsmittel, um eine Mischung zu erhalten,
b) einen Schritt des Formens der nach dem Schritt a) erhaltenen Mischung,
bei dem mindestens ein organischer Zusatz auch während des Schritts a) beigemischt wird, und wobei das Herstellungsverfahren auch einen Schritt c) des Reifens des nach dem Schritt b) erhaltenen geformten Materials umfasst, wobei der Reifungsschritt bei einer Temperatur zwischen 0 und 300 °C während einer Dauer zwischen 1 Stunde und 48 Stunden unter feuchter Luft, die zwischen 20 und 100 Gew.-% Wasser enthält, durchgeführt wird.

8. Herstellungsverfahren nach Anspruch 7, bei dem mindestens eine Siliziumoxidquelle auch während des Schritts a) beigemischt wird.

9. Herstellungsverfahren nach einem der Ansprüche 7 oder 8, bei dem der Schritt b) durch Extrusion oder Tablettieren durchgeführt wird.

10. Herstellungsverfahren nach einem der Ansprüche 7 bis 9, bei dem das nach dem Formungsschritt b) geformte Material, das einem Reifungsschritt c) unterzogen wurde, keinem Endkalzinierungsschritt unterzogen wird.

11. Herstellungsverfahren nach einem der Ansprüche 7 bis 9, wobei das Herstellungsverfahren auch einen Schritt d) des Kalzinierens bei einer Temperatur zwischen 50 und 500 °C während einer Dauer zwischen 1 und 6 h umfasst.

## Claims

1. A material comprising at least one zeolite shaped with a binder formulation comprising at least one hydraulic binder in which said binder formulation also comprises at least one organic adjuvant selected from cellulose derivatives, polyethylene glycols, monocarboxylic aliphatic acids, alkylated aromatic compounds, sulphonic acid salts, fatty acids, polyvinyl pyrrolidone, polyvinyl alcohol, methylcellulose, polyacrylates, polymethacrylates, polyisobutene, polytetrahydrofuran, starch, polysaccharide type polymers, scleroglucan, hydroxyethylated cellulose type derivatives, carboxymethylcellulose, lignosulphonates and galactomannan derivatives, used alone or as a mixture, . in which said material has the following composition:
• 10% to 95% by weight of at least one zeolite,
• 1% to 20% by weight of at least one hydraulic binder,
• 0% to 5% by weight of at least one source of silica,
• 1% to 7% by weight of at least one organic adjuvant, the percentages by weight being expressed with respect to the total weight of said material and the sum of the contents of each of the compounds of said material being equal to 100%.

2. The material according to claim 1, in which said zeolite is selected from X, Y zeolites, ZSM-12, mordenite, A zeolite, P zeolite, beta zeolite, ZSM-5, mazzite, boggsite, gismondite, heulandite, chabasite, LTL, MCM-22, EMC-2, SAPO-31, AlPO-4, GaPO-4 and VPI-5, used alone or as a mixture.

3. The material according to claim 1 or claim 2, in which said hydraulic binder is selected from Portland cement, high-alumina cements, sulphoaluminate cements, plaster, phosphate bonded cements, blast furnace slag cements and mineral phases selected from alite (Ca₃SiO₅), belite (Ca₂SiO₄), alumino-ferrite (or brownmillerite: with half unit formula Ca₂(Al,Fe³⁺)₂O₅)), tricalcium aluminate (Ca₃Al₂O₆), calcium aluminates such as monocalcium aluminate (CaAl₂O₄), and calcium hexoaluminate (CaAl₁₂O₁₈), used alone or as a mixture.

4. The material according to claim 3, in which the hydraulic binder is selected from Portland cement and high-alumina cements.

5. The material according to one of claims 1 to 4, in which said binder formulation also comprises at least one source of silica.

6. The material according to one of claims 1 to 5, in which said material is in the form of extrudates, beads or pellets.

7. A process for the preparation of the material according to one of claims 1 to 6, comprising at least the following steps:
a) a step for mixing at least one powder of at least one zeolite with at least one powder of at least one hydraulic binder and at least one solvent in order to obtain a mixture,
b) a step for shaping the mixture obtained from step a) in which at least one source of silica is also mixed in during step a), said preparation process also comprises a step c) for maturation of the shaped material obtained from step b), said maturation step being carried out at a temperature in the range 0°C to 300°C, for a period in the range 1 hour to 48 hours, in which said maturation step is carried out in air, preferably in moist air containing 20% to 100% by weight of water.

8. The preparation process according to claim 7, in which at least one organic adjuvant is also mixed in during step a).

9. The preparation process according to one of claims 7 or 8, in which said step b) is carried out by extrusion or by pelletization.

10. The preparation process according to one of claims 7 to 9, in which said shaped material obtained from shaping step b) and which has undergone a maturation step c) does not undergo a final calcining step.

11. The preparation process according to one of claims 7 to 9, in which said preparation process also comprises a step d) for calcining at a temperature in the range 50°C to 500°C, for a period in the range 1 to 6 h.
